# EUROPEAN PATENT APPLICATION

(11) **EP 2 856 860 A1**
(43) Date of publication of application: **08.04.2015**
(21) Application number: 13797019.0
(22) Date of filing: 31.05.2013
(51) Int. Cl.: A01G 9/10, C09K 17/04, C09K 17/42

(54) **COLOURED ORGANIC SUBSTRATE**

(30) Priority: 01.06.2012 ES 201200047
(71) Applicant: Compostgreen, S.L., 41210 Las Pajanosas-Sevilla (ES)
(72) Inventor: BOLUDA TERUEL, Eva Mª, E-41210 Las Pajanosas-Sevilla (ES)
(74) Representative: Bartrina Diaz, José María
(86) International application number: PCT/ES2013/070351
(87) International publication number: WO 2013/178861

(57) **Abstract**

The improvement consisting of organic substrates (non-chemical) of animal, vegetable or compost origin, currently only used for the purpose of soil improvement and enrichment invention; to which dyes are added (inert pigments from iron oxide or chromium oxide in the approximate ratio of 1% to 10% by weight) by a process (not chemical) mechanical mixing until homogenization of the set (in a mixer) to change the predominant color of the final product, thus obtaining an Organic Substrate Colored with decorative and/or landscape integration utility.

## Description

The invention is applied to the field of gardening and landscaping, particularly in the field of decoration and improvement or enrichment of soils with organic substrates.

### Previous advances in the tecnological state of the art

There are now many of different elements and decorative materials for use in gardening and landscaping, mainly using plants and ornamental elements such as sculptures, fountains, stones, gravel and soils of different shades and colors, bark and logging residues from market pruning and fertilizer chemicals of different colors. Likewise, in the market there are many and various organic substrates of animal, vegetable or compost origin, which are used in order to enhance or enrich the soil, but unlike the rest of the elements, lack of decorative utility for its limited range of colors and shades.

For a larger scope, greater use and application of these organic substrates of animal, vegetable or compost origin, it would be advisable to improve the aesthetics and presentation of these materials in order to use them with decorative addition to their usefulness as soil improvement and enrichment purposes. This is where the present invention focuses or improvement.

### Explanation of invention

The present invention relates to the (non-chemical) of animal, plant or compost, organic substrates currently used only for the purpose of improving and enrichment of the soil; to that during the process of preparation (crushing, screening and mixing of different components in varying proportions depending on end use) and before packaging or bulk supply for sale, in addition to the traditional components form dyes are added (inert pigments from iron oxide or chromium oxide in the approximate ratio of 1% to 10% by weight) by a (non-chemical) mechanical mixing to homogeneity in a mixer set to change the predominant color of the final product.

Therefore, the contribution is colored and inert pigments uniformly spread over the surface of the particles of coloring substrates which is decided by mechanical mixing until homogenization of the assembly formed by the substrate and the colorants.

The purpose of coloring is to improve the original look and texture unify the different and multiple materials that may exist due to the often unpredictable source components (manure, recycling of municipal solid waste, etc.), which may change as the time of year, as consumption habits, etc. Thus we obtain the Colored Organic Substrate, i. e., an organic substrate of the desired color, clearly differentiated from the original substrate and the rest of the market, by adding to its utility for decoration and / or landscape integration.

### Example of preferred embodiment and improvement.

This invention is applicable to improvement or variety of organic substrates, please see some examples below, which are not intended to be limiting of its scope:

### Example 1.

As a first example, we have a substrate made with a mixture of compost from recycled organic matter in municipal solid waste landfill and coir. This type of material has a composition suitable for use as a soil improver and nurturing, yet his appearance (brown and trash heaps) makes it unattractive for use in gardening or landscaping, which is why we would need to change that aspect to increase its market acceptance. If said substrate, besides the usual process of crushing and screening to improve its grain, mixed with about 5% of a red dye from iron oxide, will make you look more attractive as well, and to improve and enrich the soil where applicable, give it a reddish tint to the ground; furthermore, the dye residues would mimic residues that could be visible, thus minimizing its visual rejection.

### Example 2.

Another example of application could be applied as a substrate to be used as a top dressing lawn (made for example with humus and sand) and mix it with about 10% green dye that will visually give a predominantly green color, and when extended over areas poorer or "plaques" of a planted grass (a garden, a soccer field, etc.) rather than negatively highlight areas of application, would disguise and enhance the image.

## Claims

1. Substrate Organic Colored dyes **characterized by** containing inert from iron oxide or chromium oxide (in an approximate ratio of 1% to 10% by weight) until a uniform mixed mechanically with organic substrates of animal, vegetable or compost origin. The organic substrate and its predominant color change to give a clearly differentiated from the original substrate of the organic substrate desired color.
